# EUROPEAN PATENT SPECIFICATION

(11) **EP 2 887 812 B1**
(45) Date of publication and mention of the grant of the patent: **22.11.2017**
(21) Application number: 14700051.7
(22) Date of filing: 02.01.2014
(51) Int. Cl.: A22C 17/04, A22C 17/00

(54) **AN APPARATUS FOR CONVEYING HARD CONSTITUENTS SEPARATED FROM MINCED MEAT, A MACHINE FOR MINCING MEAT, AND A METHOD FOR USE OF THE APPARATUS**
VORRICHTUNG ZUM FÖRDERN VON VON HACKFLEISCH ENTFERNTEN HARTBESTANDTEILEN, MASCHINE ZUM ZERHACKEN VON FLEISCH, UND VERFAHREN ZU IHRER VERWENDUNG
DISPOSITIF POUR TRANSPORTER DES PARTIES DURES SÉPARÉES DE LA VIANDE HACHÉE, MACHINE POUR LE POUR LE HACHAGE DE VIANDE ET PROCÉDÉ POUR LEUR USAGE.

(30) Priority: 30.01.2013 NL 2010208
(43) Date of publication of application: 01.07.2015
(73) Proprietor: VEMAG Maschinenbau GmbH, 27283 Verden/Aller (DE)
(72) Inventor: REIBER, Jeroen, 1645 PJ Ursem (NL)
(74) Representative: Eisenführ Speiser
(86) International application number: PCT/EP2014/050016
(87) International publication number: WO 2014/117962

(56) References cited:
- AU-B2- 474 820
- US-A- 4 137 605
- US-A- 4 575 899
- US-A1- 2008 035 767

## Description

The invention relates to an apparatus for conveying hard constituents separated from minced meat, to a machine for mincing meat which machine comprises the apparatus, and to a method of use of the apparatus.

Machines for mincing meat are well known in the art. They usually comprise a cutting section for mincing the meat, and a feeding section for feeding chunks of meat to the cutting section. Dependent of the type of meat fed to the machine, the minced meat comprises hard constituents which are not minced any further, such as bone fragments, tendons, rind and connective tissue. Such hard constituents are not desired and need to be separated from the minced meat and to be disposed of. The cutting section is customarily provided with means for separating the hard constituents from the minced meat and with a conduit for discharging the hard constituents. The discharge of the hard constituents poses a problem in that the discharge of the hard constituents needs to take place without loss of pressure in the cutting section. Another problem is that when the flow of hard constituents is not carefully controlled, minced meat may be discharged together with the hard constituents. Thus, a sufficient quantity of hard constituents needs to be discharged with a minimum loss of valuable minced meat and without loss of pressure in the cutting section.

It has been proposed to control the discharge of the hard constituents by using a pneumatic valve or a ball valve installed in the discharge conduit for the hard constituents. However, it has been found that under practical circumstances such valves are not well suited for that purpose because of a frequent occurrence of loss of pressure and concomitant loss of valuable minced meat. Without wishing to be bound by theory, it is believed that the proper functioning of a pneumatic valve or a ball valve depends on the temperature and pressure of the hard constituents. Furthermore, it is believed that the mode of operation of a pneumatic valve or a ball valve, which in normal operation can only be completely opened or closed, does not permit a proper control of the discharge of the hard constituents.

US 2008/0035767 A1 proposed to employ a conveying device for conveying hard constituents in the hard constituents discharge conduit. As an example, it is proposed to employ a vane pump as the conveying device.

The present invention provides an apparatus for conveying hard constituents separated from minced meat, wherein the apparatus comprises
- a housing which is provided with an inlet opening for the hard constituents, an outlet opening for the hard constituents and an inlet opening for a pressurised fluid, and
- inside the housing a movable part which movable part fits in the housing such that it can block the inlet opening for the hard constituents, the outlet opening for the hard constituents and the inlet opening for a pressurised fluid, and which movable part is movable within and relative to the housing from a first position to a second position and from the second position to the first position, and
wherein the inner wall of the housing and the wall of the movable part enclose a chamber which chamber communicates with the inlet opening for the hard constituents when the movable part is in the first position, and communicates with the inlet opening for the pressurised fluid and with the outlet opening for the hard constituents when the movable part is in the second position.

The present invention also provides a machine for mincing meat, which machine comprises
- a cutting section for mincing the meat, which cutting section is provided with the capability of separating hard constituents from the minced meat,
- a discharge conduit for the hard constituents, and
- an apparatus in accordance with this invention for conveying hard constituents separated from minced meat,
wherein the discharge conduit for the hard constituents is fluidly connected to the inlet opening for the hard constituents of the apparatus.

The present invention also provides a method of use of an apparatus in accordance with this invention, which method comprises the steps of
a. moving the movable part relative to the housing to bring the movable part in the first position,
b. introducing hard constituents separated from minced meat through the inlet opening for the hard constituents into the chamber,
c. moving the movable part relative to the housing to bring the movable part in the second position,
d. introducing pressurised fluid through the inlet opening for a pressurised fluid into the chamber, thereby ejecting hard constituents from the chamber through the outlet opening for the hard constituents, and e. repeating the steps a-d.

It has been found that when the apparatus for conveying hard constituents in accordance with the invention is employed in the discharge conduit for hard constituents of a machine for mincing meat the discharge of hard constituents can be easily controlled by controlling the rate at which the steps a-d are passed, so that there is a minimal loss of valuable minced meat. The discharge is independent of the temperature and the pressure of the hard constituents, and the discharge is constant, dependent of the rate at which the steps a-d are passed. Because there is no open connection between the inlet opening for the hard constituents and the outside there is no danger that the use of the apparatus for conveying hard constituents may lead to a loss of pressure in the cutting section. Moreover, the invented apparatus comprises few parts, in particular few moving parts, and its construction is relatively simple so that it can easily be disassembled and re-assembled. The invented apparatus is therefore convenient in its use and in servicing, in particular cleaning. Thus, the present invention involves unexpected advantages over the prior art.
FIG. 1 provides a side view of an embodiment of the apparatus of this invention, in which the movable part is movable in a linear fashion, relative to the housing.
FIG. 2 provides a side view of the embodiment of FIG. 1, from the opposite side.
FIG. 3 provides a cross sectional view of the embodiment of FIG. 1,
   wherein the moveable part is in the first position.
FIG. 4 provides a cross sectional view of the embodiment of FIG. 1,
   wherein the moveable part is in the second position.
FIG. 5 provides a side view of an embodiment of the apparatus of this invention, in which the movable part is movable, relative to the housing, in a rotating fashion, and the axis of rotation is parallel to the flow of hard constituents through the apparatus.
FIG. 6 provides a side view of the embodiment of FIG. 5, from the opposite side.
FIG. 7 provides a cross sectional view of the embodiment of FIG. 5,
   wherein the moveable part is in the first position.
FIG. 8 provides a cross sectional view of the embodiment of FIG. 5,
   wherein the moveable part is in the second position.
FIG. 9 provides a perspective view of an embodiment of the apparatus of this invention, in which the movable part is movable, relative to the housing, in a rotating fashion, and the axis of rotation is perpendicular to the flow of hard constituents through the apparatus.
FIG. 10 provides a cross sectional view of the embodiment of FIG. 9,
   wherein the moveable part is in the first position.
FIG. 11 provides a cross sectional view of the embodiment of FIG. 9,
   wherein the moveable part is in the second position.
FIG. 12 provides a cross sectional view of a preferred embodiment of a movable part which may be employed in the embodiment of the apparatus of this invention shown in FIG. 9.
FIG. 13 provides a schematic of the machine for mincing meat of this invention.

Throughout the Figures, the same objects will have the same reference numbers.

The apparatus of the invention comprises a housing and a movable part positioned inside the housing. The housing is provided with an inlet opening and an outlet opening for the hard constituents separated from minced meat. The housing is also provided with an inlet opening for a pressurised fluid.

Typically, the housing may comprise a lid, so that the movable part may be taken out of the housing for servicing and cleaning the apparatus. The housing may be closed by attaching the lid detachably to a flange portion of the housing, for example by using fasteners, such as clamps, bolts or sets of bolts and nuts. When bolts are involved, the lid and the flange portion may be provided with holes for receiving the bolts. Bolts for fastening the lid may advantageously be inserted permanently into the holes of the lid, so that they form, together with the lid, a single part and cannot get lost. In some embodiments, in particular if the lid is provided with one or more of the inlet and outlet openings, it would be an advantage if the housing could only be closed with the lid positioned in a certain, correct position relative to the flange portion, which is the position in which the one or more of the inlet and outlet openings in the lid is in the correct position relative to the other parts of the apparatus. This can be achieved by having holes or other provisions for the fasteners arranged in a suitable pattern relatively to each other, such that the housing can be closed only when the lid is in the correct position. Alternatively, the lid may be provided with a male portion or a female portion and the flange portion may be provided with a female portion or a male portion, respectively, such that the housing can only be closed in a position of the lid wherein the female portion can receive the male portion, which position coincides with the correct position of the lid.

The movable part fits inside the housing typically such that the movable part is movable relatively to the housing, and the movable part can block the inlet opening for the hard constituents, the outlet opening for the hard constituents and the inlet opening for the pressurised fluid. As the skilled person will understand, at locations where the housing is intended to guide the movable part during its movement, the movable part typically fits inside the housing with some clearance. Thus, at locations where the housing is intended to guide the movable part during its movement, the apparatus suitably provides a clearance between the housing and the movable part. The clearance may suitably be in the range of from 0.01 to 1 mm, more suitably in the range of from 0.02 to 0.5 mm, for example 0.1 mm. Fatty substances released by the hard constituents may assist in lubrication and in sealing off leakage, if any, along the inlet and outlet openings.

Within the housing there is a chamber, which is enclosed by the inner wall of the housing and by the wall of the movable part. The movement of the movable part allows the movable part to occupy a first position or a second position and to move to and from the first position and to and from the second position. In the first position the chamber communicates with the inlet opening for the hard constituents. In the second position the chamber communicates with the inlet opening for the pressurised fluid and with the outlet opening for the hard constituents. Typically, the inlet opening for the hard constituents and the outlet opening for the hard constituents are located at a distance from each other, so that the chamber does not communicate simultaneously with the inlet opening for the hard constituents and the outlet opening for the hard constituents. Typically, the inlet opening for the hard constituents and the inlet opening for the pressurised fluid are located at a distance from each other, so that the chamber does not communicate simultaneously with the inlet opening for the hard constituents and the inlet opening for the pressurised fluid.

The type of movement of the movable part relative to the housing is not essential to this invention. For example, the movement may be a linear movement or a rotating movement. The skilled person will appreciate that the shapes of the apparatus, the housing and the moving part, and the method of driving the movable part, may depend on the type of movement. For example, when the movement is linear, the shape may preferably be essentially the shape of a block. Preferably, the apparatus may be configured for a rotating movement of the movable part relative to the housing, in which case the shape may preferably be essentially the shape of a circular cylinder. In the case of a linear movement, the direction of the linear movement may typically be perpendicular to the direction of flow of the hard constituents through the apparatus. In the case of a rotating movement, the axis of the rotating movement may typically be parallel to the direction of flow of the hard constituents through the apparatus, and, preferably, it may be perpendicular to the direction of flow of the hard constituents through the apparatus. When the movable part is in the shape of a block or a circular cylinder, the block or the circular cylinder may be provided with one or more cavities to form the chamber(s).

The movable part may be driven manually. In the case of a linear movement, it may be more suitable to drive the movable part by using a pneumatic or hydraulic force. In the case of a rotating movement, it may be more suitable to apply an engine, for example an electric motor, a hydraulic motor or a pneumatic motor, of which the energy is transmitted to the movable part by means of a drive shaft. An electric motor which is configured to drive the movable part may be preferred. An electric motor is preferably frequency controlled by using a frequency inverter. In a preferred embodiment, the apparatus of the invention comprises a coupling part, which can be connected detachably to the drive shaft of the engine and which can be slidably connected to the movable part. In this embodiment, upon disassembly of the apparatus, the movable part can be slid away from the coupling part and out of the housing. A connection between the movable part, or, if applicable, the coupling part, and the drive shaft of the engine may be secured with a parallel key.

The chamber may comprise a portion in the shape of a circular cylinder. Preferably, the axis of the circular cylinder of the chamber is in the intended direction of flow of the hard constituents. In addition, the chamber may comprise a portion which is a conduit, for example a conduit enabling the circular cylinder of the chamber to communicate with the inlet opening for the pressurised fluid. Any other shape of the chamber or a portion of the chamber may be conceivable, for example an irregular shape or a cubical shape. However, in general, this is less preferred in view of the more difficult manufacture of the apparatus, the more difficult flow if the hard constituents and/or more difficult servicing and cleaning of the apparatus.

There may be a single chamber in the housing. Alternatively, two or more chambers may be applied, which are able to communicate with the inlet opening for the hard constituents, the outlet opening for the hard constituents and the inlet opening for the pressurised fluid, as described hereinbefore. The skilled person will appreciate that in the case of multiple chambers, there will be multiple first positions, in each first position one of the chambers communicating with the inlet opening for the hard constituents. Likewise, there will be multiple second positions, in each second position one of the chambers communicating with the outlet opening for the hard constituents and the inlet opening for the pressurised fluid. Depending on the locations of the chambers relative to each other, there may be first positions coinciding with second positions.

The number of chambers may be two, three, or more, for example up to fifteen or even twenty. With more chambers the capacity of the apparatus may be increased. The capacity of an apparatus provided with a plurality of chambers may be decreased by blocking one or more chambers by inserting a body of a suitable shape into the chamber, so that no longer hard constituents can be introduced into the chamber. For example a body having the shape of a circular cylinder may be introduced in a chamber of even shape and size.

The chamber may be of any suitable size. The volume of the chamber may be in the range of from 0.5 to 10 cm³, preferably 1 to 5 cm³, for example 3 cm³. A portion of a chamber having the shape of a circular cylinder may have a length in the range of from 0.3 to 5 cm, preferably 0.5 to 3 cm, for example 1.5 cm, and a diameter in the range of from 0.3 to 5 cm, preferably 0.5 to 3 cm, for example 1.5 cm.

The inlet and outlet openings for the hard constituents may conveniently be a circular hole, illegibly provided with an internal threading so that conduits for the hard constituents can be detachably connected and secured. A suitable diameter for such inlet and outlet openings for the hard constituents is in the range of from 5 to 40 mm, in particular in the range of from 10 to 30 mm, for example 20 mm. The inlet opening for the pressurised fluid may conveniently by a circular hole, illegibly provided with an internal threading so that a conduit for the pressurised fluid can be detachably connected and secured. A suitable diameter for such inlet opening for the pressurised fluid is in the range of from 2 to 30 mm, in particular in the range of from 5 to 20 mm, for example 12 mm.

The housing and the movable part may be manufactured from any material which is suitable for the intended purpose. Eligible materials may be metals, such as nickel and iron, metal alloys, glass, ceramics or plastic materials. Suitable plastic materials are polymeric materials, such as thermohardening polymers or, in particular, thermoplastic polymers. Combinations of such materials are conceivable and may be advantageous. For example, a combination of a metal housing and a plastic movable part may be self-lubricating. Further, the use of coating materials may be considered, for example enamel, on metal. Preferably, the housing is produced from a stainless steel, in particular stainless steel 303, stainless steel 304, or stainless steel 316. The moving part is preferably produced from an engineering thermoplastic, for example from a polyamide, such as nylon-6 or nylon 6,6, or polyethylene terephthalate. Suitably, polyethylene terephthalate comprises a solid lubricant, such as in the case of ERTALYTE TX polyethylene terephthalate, available from Quadrant Engineering Plastics Products (ERTALYTE is a Quadrant EPP trade name).

In a preferred embodiment a sensor, for example an inductive proximity switch, may be applied which may detect that the movable part is in the second position or approaches the second position, and which may control a valve allowing a pulse of the pressurised fluid to reach the inlet opening for the pressurised fluid. A timing device may preferably be employed for closing the valve and control of the duration of the pulse. This embodiment allows that pressurised fluid is admitted only when the movable part is in the second position or in the proximity of the second position, so that there may be less penetration, if any, of pressurised fluid into the discharge conduit for the hard constituents and into the cutting section.

Machines for mincing meat are well known in the art, for example from US 2008/0035767 A1 and from US 4795104. Such machines comprise a cutting section for mincing the meat, which cutting section is provided with the capability of separating hard constituents from the minced meat, and a discharge conduit for the hard constituents. Any known machine of such type may be employed in this invention, provided that the discharge conduit for the hard constituents of the machine is fluidly connected to the inlet opening for the hard constituents of the apparatus according to the invention. The outlet opening for the hard constituents of the apparatus may be connected to a conduit leading to a container for collecting and/or storing the hard constituents.

The machine for mincing meat may be provided with a feeding section, including a hopper and a pump which is suitable for feeding chunks of meat to the cutting section. The pump may be, for example, a screw pump or a vane pump. The cutting section may be an assembly of rotating blades and perforated disks. The cutting section is provided with the capability of separating hard constituents from the minced meat. The separation may be an internal separation or an external separation, such as disclosed in US 2008/0035767 A1. Internal separation may be achieved by the application of grooves in the perforated disk. The grooves lead the hard constituents, which do not pass the perforated disk, to the discharge conduit for the hard constituents which is centrally located relative to the perforated disk and the rotating blades. External separation may be achieved by applying rotating blades which have hollow cutting arms. The hollow cutting arms lead the hard constituents, which do not pass the perforated disk, to the discharge conduit for the hard constituents located in the housing of the cutting section. The discharge conduit for the hard constituents is generally a pipe having an internal diameter in the range of from 10 to 50 mm, in particular in the range of from 15 to 40 mm, for example 30 mm.

The hard constituents separated from minced meat represent themselves as a paste-like material. It typically comprises bone fragments, tendons, rind or connective tissue. In addition, it may comprise fatty substances.

The hard constituents may generally flow under the influence of pressure. The pressure prevailing in the cutting section of the meat mincing machine may generally be sufficient for introducing the hard constituents through the inlet opening for the hard constituents into the chamber of the apparatus of this invention. Typically, the hard constituents are introduced into the chamber at a pressure in the range of from 0.25 to 10 MPa, more typically in the range of from 0.5 to 5 MPa, for example 2 or 3 MPa. As used in this patent document, pressures are specified as absolute pressure.

The method of using the apparatus of the invention comprises the steps of
a. moving the movable part relative to the housing to bring the movable part in the first position,
b. introducing hard constituents separated from minced meat through the inlet opening for the hard constituents into the chamber,
c. moving the movable part relative to the housing to bring the movable part in the second position,
d. introducing pressurised fluid through the inlet opening for a pressurised fluid into the chamber, thereby ejecting hard constituents from the chamber through the outlet opening for the hard constituents, and
e. repeating the steps a-d.

The pressurised fluid for use in the apparatus of this invention may be a liquid, for example water. It is preferred to employ as a fluid a gas or a gas mixture, because gases and gas mixtures are more compressible than liquids. Suitable gases or gas mixtures are nitrogen, helium and, in particular, air. The pressurised fluid may have a pressure in the range of from 0.15 to 2 MPa, in particular in the range of from 0.2 to 1 MPa, for example 0.4, 0.5 or 0.6 MPa.

The capacity of the apparatus of the invention having a given number of chambers of a given size depends on the rate at which the steps a-d are passed. The steps a-d may typically be passed at a rate of up to 300 per minute, more typically in the range of from 5 to 250 per minute, preferably in the range of from 10 to 200 per minute, in particular in the range of from 15 to 150 per minute, for example 40, 60, 80 or 100 per minute. As used herein, the rate at which the steps a-d are passed is defined as the number of times, per minute, that the moving part is in a first position. The movement may be continuous or discontinuous. Preferably, the movement is continuous.

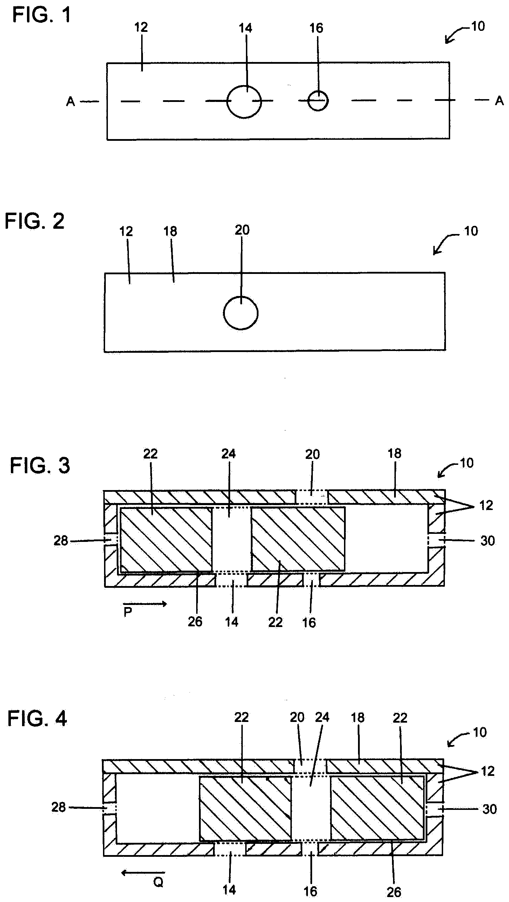

Now turning to the Figures, FIG. 1 provides a side view of embodiment 10 of the apparatus of this invention, in which the movable part is movable, relative to the housing, in a linear fashion. Housing 12 is provided with inlet opening 14 for the hard constituents and inlet opening 16 for the pressurised fluid.

FIG. 2 shows the side of embodiment 10 which is opposite to the side shown in FIG. 1. Housing 12 is provided with lid 18 (not visible in FIG. 1), and outlet opening 20 for the hard constituents. Fasteners for detachably attaching the lid are not drawn.

FIG. 3 provides a cross sectional view of embodiment 10 of FIG. 3 along line A-A (FIG. 1). In FIG. 3, movable part 22 is in the first position. The inner wall of housing 12 and the wall of the movable part 22 enclose chamber 24. Chamber 24 communicates with inlet opening 14 for the hard constituents. Hard constituents may be introduced into chamber 24 through inlet opening 14. Outlet opening 20 for the hard constituents and inlet opening 16 for the pressurised fluid are blocked by movable part 22. Clearance 26 enables the movable part to be movable relatively to housing 12. Inlet 28 for hydraulic fluid enables introduction of pressurised hydraulic fluid for moving movable part 22 in a linear fashion in the direction of arrow P from the first position to the second position, which is shown in FIG. 4.

In the cross sectional view of FIG. 4 along line A-A (FIG. 1), movable part 22 is in the second position. Chamber 24 communicates with outlet opening 20 for the hard constituents and inlet opening 16 for the pressurised fluid. Pressurised fluid may be introduced into chamber 24 through inlet opening 16, which causes hard constituents present in chamber 24 to be ejected through outlet opening 20. Inlet opening 14 for the hard constituents is blocked by movable part 22. Inlet 30 for hydraulic fluid enables introduction of pressurised hydraulic fluid for moving movable part 22 in a linear fashion in the direction of arrow Q from the second position to the first position, which is shown in FIG. 3.

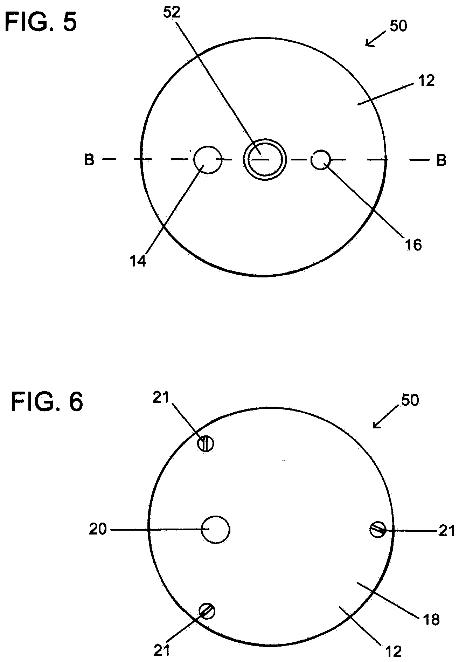

FIG. 5 provides a side view of embodiment 50 of the apparatus of this invention, in which the movable part is movable, relative to the housing, in a rotating fashion, and the axis of rotation is parallel to the flow of hard constituents through the apparatus. Housing 12 is provided with inlet opening 14 for the hard constituents and inlet opening 16 for the pressurised fluid. Shaft 52 extends through housing 12 and is a protruded portion of the movable part, intended for driving the movable part relative to housing 12. Shaft 52 may be coupled to the drive shaft of an electric motor (not shown in FIG. 5).

FIG. 6 shows the side of embodiment 50 which is opposite to the side shown in FIG. 5. Housing 12 is provided with lid 18 (not visible in FIG. 5), and outlet opening 20 for the hard constituents. Lid 12 is detachably attached to the flange portion (not visible in FIG. 6) of housing 12 by using bolts 21.

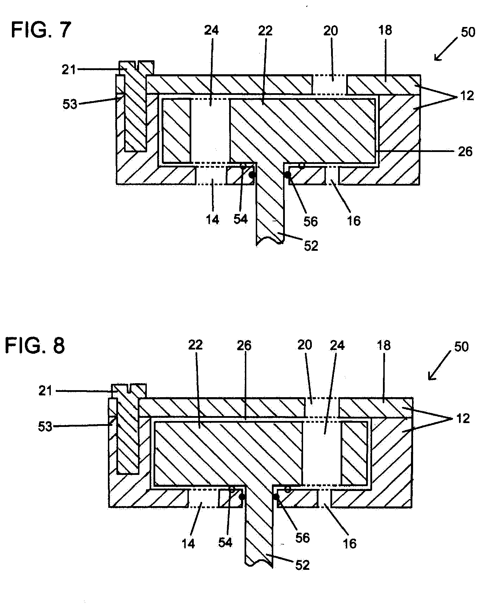

FIG. 7 provides a cross sectional view of embodiment 50 of FIG. 5 along line B-B (FIG. 5). In FIG. 7, movable part 22 is in the first position. The inner wall of housing 12 and the wall of the movable part 22 enclose chamber 24. Chamber 24 communicates with inlet opening 14 for the hard constituents. Hard constituents may be introduced into chamber 24 through inlet opening 14. Outlet opening 20 for the hard constituents and inlet opening 16 for the pressurised fluid are blocked by movable part 22. Seal ring 54 may be positioned between housing 12 and moving part 22. Lid 12 is detachably attached to flange portion 53 of housing 12 by using bolts 21. Bolts 21 extend into threaded holes in flange portion 53 of housing 12. Clearance 26 enables the movable part to be movable relatively to housing 12. Shaft 52, which is a protruding portion of movable part 22, may be coupled to the drive shaft of an electric motor (not shown in FIG. 7). Shaft 52 is surrounded by bearing 56. Rotation of shaft 52 enables movable part 22 to rotate from the first position to the second position, which is shown in FIG. 8.

In the cross sectional view of FIG. 8 along line B-B (FIG. 5), movable part 22 is in the second position. Chamber 24 communicates with outlet opening 20 for the hard constituents and inlet opening 16 for the pressurised fluid. Pressurised fluid may be introduced into chamber 24 through inlet opening 16, which causes hard constituents present in chamber 24 to be ejected through outlet opening 20. Inlet opening 14 for the hard constituents is blocked by housing 12. Rotation of shaft 52 enables movable part 22 to rotate from the second position to the first position, which is shown in FIG. 7. Rotation from the second position to the first position is preferably in the same direction as rotation from the first position to the second position. Rotation in the opposite direction is less easily implemented.

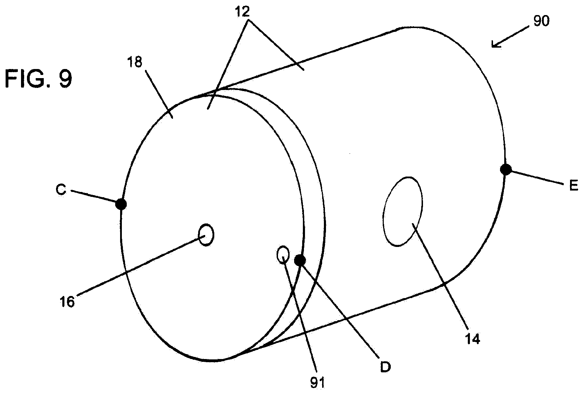

FIG. 9 provides a perspective view of embodiment 90 of the apparatus of this invention, in which the movable part is movable relative to the housing in a rotating fashion, and the axis of rotation is perpendicular to the flow of hard constituents through the apparatus. Housing 12 is provided with lid 18, inlet opening 14 for the hard constituents, an outlet for the hard constituents (not visible in FIG. 9) and inlet opening 16 for the pressurised fluid. Fasteners for detachably attaching lid 12 are not drawn. Hole 91 receives a pin (not visible in FIG. 9), which hole 91 and pin together enable closing of lid 12 only when the lid is in the correct position.

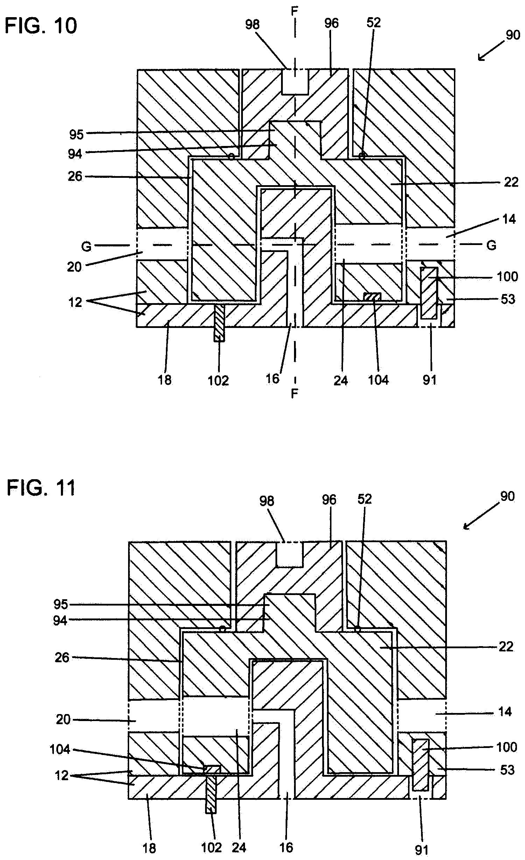

FIG. 10 provides a cross sectional view of embodiment 90 of FIG. 9, in the plane through the marks C, D and E (FIG. 9). In FIG 10, moveable part 22 is in the first position. The inner wall of housing 12 and the wall of the movable part 22 enclose chamber 24. Chamber 24 communicates with inlet opening 14 for the hard constituents. Hard constituents may be introduced into chamber 24 through inlet opening 14. Outlet opening 20 for the hard constituents and inlet opening 16 for the pressurised fluid are blocked by movable part 22. Clearance 26 enables the movable part to be movable relatively to housing 12. Pin 100 is fixed in flange portion 53. Hole 91 receives pin 100. Seal ring 52 may be positioned between housing 12 and moving part 22. Protruding portion 94 of movable part 22 is in the shape of a hexagonal prism with the line F-F as the axis of the hexagonal prism. Protruding portion 94 is inserted into hexagonally shaped cavity 95 of coupling part 96 to form a connection between movable part 22 and coupling part 96 which connection is slidable in direction of the line F-F. At its distal end 98, coupling part 96 may be coupled to the drive shaft of an electric motor (not shown in FIG. 10), which coupling may be secured by means of a parallel key (not shown in FIG. 10). As housing 12 is produced from stainless steel 304, and movable part 12 and coupling part 96 are produced from ERTALYTE TX polyethylene terephthalate available from Quadrant Engineering Plastics Products (ERTALYTE is a Quadrant EPP trade name), there is no need to install a bearing. Rotation of coupling part 96 enables movable part 22 to rotate from the first position to the second position, which is shown in FIG. 11. Inductive proximity switch 102 (not drawn in FIG. 9) positioned in lid 12, in conjunction stainless steel 306 disk 104 positioned in moving part 22, can detect movable part 22 when approaching the second position. Inductive proximity switch 102 controls a valve (not drawn) allowing a pulse of the pressurised fluid to reach inlet opening 16 for the pressurised fluid.

FIG. 11 provides a cross sectional view of embodiment 90 of FIG. 9, in the plane through the marks C, D and E. In FIG 11, moveable part 22 is in the second position. Chamber 24 communicates with outlet opening 20 for the hard constituents and inlet opening 16 for the pressurised fluid. Pressurised fluid may be introduced into chamber 24 through inlet opening 16, which causes hard constituents present in chamber 24 to be ejected through outlet opening 20. Inlet opening 14 for the hard constituents is blocked by movable part 22. Rotation of coupling part 96 enables movable part 22 to rotate from the second position to the first position, which is shown in FIG. 10. Rotation from the second position to the first position is preferably in the same direction as rotation from the first position to the second position. Rotation in the opposite direction is less easily implemented.

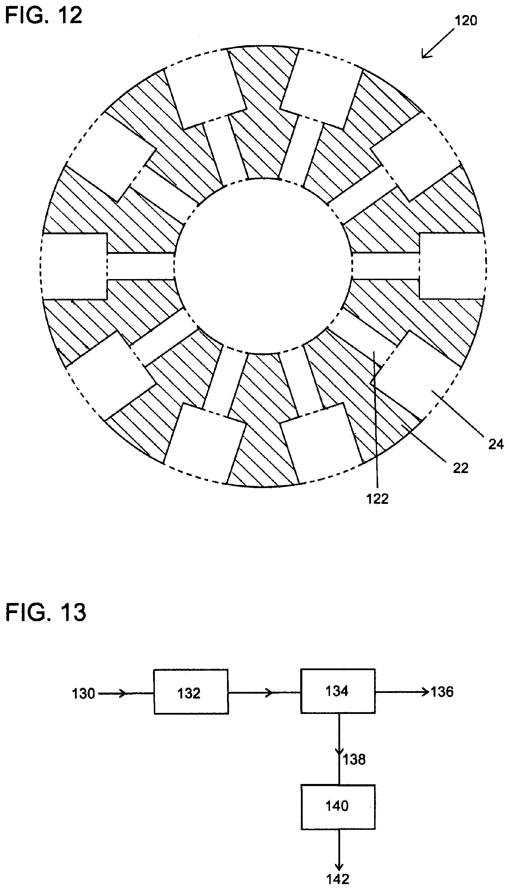

FIG. 12 is a cross sectional view of embodiment 120 of a movable part 22 which may be employed in embodiment 90 of the apparatus of this invention (FIGS. 9, 10, 11). The cross sectional view is along line G-G in FIG. 10. Embodiment 120 comprises ten chambers 24. Chambers 24 comprise a portion 122 which is a conduit enabling the chamber to communicate with inlet opening 16 (FIG. 10) for a pressurised fluid, when the movable part is in a second position.

FIG. 13 is a schematic of the machine for mincing meat of this invention. A flow 130 of chunks of meat may be introduced into feeding section 132 for feeding the chunks of meat to cutting section 134 for mincing the meat. Cutting section 134 is provided with the capability of separating hard constituents from the minced meat. Flow 136 of minced meat which is free of hard constituents is produced. Discharge conduit 138 for the hard constituents is fluidly connected to the inlet opening for the hard constituents of apparatus 140 for conveying hard constituents. Flow 142 of the hard constituents from the outlet opening for the hard constituents is provided.

## Claims

1. An apparatus for conveying hard constituents separated from minced meat, wherein the apparatus comprises
- a housing (12) which is provided with an inlet opening (14) for the hard constituents, and an outlet opening (20) for the hard constituents,
**characterized by**
- an inlet opening (16) for a pressurised fluid, and
- inside the housing (12) a movable part (22) which movable part fits in the housing (12) such that it can block the inlet opening (14) for the hard constituents, the outlet opening (20) for the hard constituents and the inlet opening (16) for a pressurised fluid, and which movable part (12) is movable within and relative to the housing (12) from a first position to a second position and from the second position to the first position, and
wherein the inner wall of the housing (12) and the wall of the movable part enclose a chamber (24) which chamber communicates with the inlet opening (14) for the hard constituents when the movable part (22) is in the first position, and communicates with the inlet opening (16) for the pressurised fluid and with the outlet opening (20) for the hard constituents when the movable part (22) is in the second position.

2. An apparatus according to claim 1, wherein the housing (12) comprises a lid (18) allowing the movable part (22) to be taken out of the housing (12).

3. An apparatus according to claim 1 or 2, wherein at locations where the housing (12) is intended to guide the movable part (22) during its movement, the apparatus provides a clearance (26) between the housing (12) and the movable part (22).

4. An apparatus according to claim 3, wherein the clearance (26) is in the range of from 0.01 to 1 mm, in particular in the range of from 0.02 to 0.5 mm.

5. An apparatus according to any of claims 1-4, wherein the apparatus is configured for a rotating movement of the movable part (22) relative to the housing (12).

6. An apparatus according to claim 5, wherein the shape of the moving part (22) comprises the shape of a circular cylinder.

7. An apparatus according to claim 5 or 6, wherein the apparatus additionally comprises an electric motor configured to drive the movable part (22).

8. An apparatus according to any of claims 1-7, wherein the apparatus provides for two or more of the chambers (24).

9. An apparatus according to claim 8, wherein the number of chambers (24) is in the range of from two to twenty, inclusive, in particular in the range of from three to fifteen, inclusive.

10. An apparatus according to any of claims 1-9, wherein the volume of the chamber (24) is in the range of from 0.5 to 10 cm³ , in particular in the range of from 1 to 5 cm³.

11. An apparatus according to any of claims 1-10, wherein the housing (12) is produced from a stainless steel and the moving part (22) is produced from a polymeric material.

12. A machine for mincing meat, which machine comprises
- a cutting section (134) for mincing the meat, which cutting section (134) is provided with the capability of separating hard constituents from the minced meat,
- a discharge conduit (138) for the hard constituents, and
**characterized by**
- an apparatus according to any of claims 1 to 11,
wherein the discharge conduit (138) for the hard constituents is fluidly connected to the inlet opening (14) for the hard constituents of the apparatus.

13. A method of use of an apparatus according to any of claims 1 to 11, which method comprises the steps of
a. moving the movable part (22) relative to the housing (12) to bring the movable part (22) in the first position,
b. introducing hard constituents separated from minced meat through the inlet opening (14) for the hard constituents into the chamber (24),
c. moving the movable part (22) relative to the housing (12) to bring the movable part (22) in the second position,
d. introducing pressurised fluid through the inlet opening (16) for a pressurised fluid into the chamber (24), thereby ejecting hard constituents from the chamber (24) through the outlet opening (20) for the hard constituents, and
e. repeating the steps a-d.

14. A method according to claim 13, wherein the pressurised fluid is a gas or a gas mixture, in particular air.

15. A method according to claim 13 or 14, wherein the method comprises passing steps a-d at a rate in the range of up to 300 per minute, in particular in the range of from 5 to 250 per minute, more in particular in the range of from 10 to 200 per minute, most in particular in the range of from 15 to 150 per minute, the rate being defined as the number of times, per minute, that the moving part (22) is in a first position.

## Patentansprüche

1. Eine Vorrichtung zum Fördern von harten Bestandteilen, welche von Hackfleisch getrennt sind, wobei die Vorrichtung aufweist:
ein Gehäuse (12), das mit einer Einlassöffnung (14) für die harten Bestandteile versehen ist, und einer Auslassöffnung (20) für die harten Bestandteile,
**gekennzeichnet durch**
eine Einlassöffnung (16) für ein unter Druck stehendes Fluid, und
ein innerhalb des Gehäuses (12) bewegliches Teil (22), das in das Gehäuse (12) eingepasst ist, sodass es die Einlassöffnung (14) für die harten Bestandteile, die Auslassöffnung (20) für die harten Bestandteile und die Einlassöffnung (16) für das unter Druck stehende Fluid blockieren kann, und wobei das bewegliche Teil (12) innerhalb und relativ zu dem Gehäuse (12) von einer ersten Position zu einer zweiten Position und von der zweiten Position zu der ersten Position bewegbar ist, und
wobei die innere Wand des Gehäuses (12) und die Wand des beweglichen Teiles eine Kammer (24) umgeben, wobei die Kammer mit der Einlassöffnung (14) für die harten Bestandteile in Verbindung steht, wenn das bewegliche Teil (22) in der ersten Position ist und mit der Einlassöffnung (16) für das unter Druck stehende Fluid und mit der Auslassöffnung (20) für die harten Bestandteile in Verbindung steht, wenn das bewegliche Teil (22) in der zweiten Position ist.

2. Eine Vorrichtung nach Anspruch 1, wobei das Gehäuse (12) einen Deckel (18) aufweist, der ermöglicht, dass das bewegliche Teil (22) aus dem Gehäuse (12) herausgenommen werden kann.

3. Eine Vorrichtung nach Anspruch 1 oder 2, wobei an den Stellen, an denen das Gehäuse (12) vorgesehen ist, das bewegliche Teil (22) während seiner Bewegung zu führen, die Vorrichtung ein Spaltmaß (26) zwischen dem Gehäuse (12) und dem beweglichen Teil (22) vorsieht.

4. Eine Vorrichtung nach Anspruch 3, wobei das Spaltmaß im Bereich zwischen 0,1 bis 1 mm liegt, insbesondere in einem Bereich von 0,02 bis 0,5 mm.

5. Eine Vorrichtung nach einem der Ansprüche 1 - 4, wobei die Vorrichtung für eine rotierende Bewegung des beweglichen Teiles (22) relativ zum Gehäuse (12) konfiguriert ist.

6. Eine Vorrichtung nach Anspruch 5, wobei die Form des beweglichen Teiles (22) die Form eines kreisrunden Zylinders aufweist.

7. Eine Vorrichtung nach Anspruch 5 oder 6, wobei die Vorrichtung zusätzlich einen elektrischen Motor aufweist, der dazu eingerichtet ist, das bewegliche Teil (22) anzutreiben.

8. Eine Vorrichtung nach einem der Ansprüche 1 - 7, wobei die Vorrichtung für zwei oder mehr Kammern (24) vorbereitet ist.

9. Eine Vorrichtung nach Anspruch 8, wobei die Anzahl der Kammern (24) im Bereich von einschließlich zwei bis zwanzig, insbesondere im Bereich von einschließlich drei bis fünfzehn liegt.

10. Eine Vorrichtung nach einem der Ansprüche 1 - 9, wobei das Volumen der Kammer (24) im Bereich von 0,5 bis 10 cm³, insbesondere im Bereich von 1 bis 5 cm³ liegt.

11. Eine Vorrichtung nach einem der Ansprüche 1 - 10, wobei das Gehäuse (12) aus rostfreiem Stahl hergestellt ist und das bewegliche Teil (22) aus einem Polymermaterial hergestellt ist.

12. Eine Maschine zum Zerkleinern von Fleisch, wobei die Maschine aufweist
einen Schneidabschnitt (134) zum Zerkleinern des Fleisches, wobei der Schneidabschnitt (134) mit der Fähigkeit ausgestattet ist, harte Bestandteile aus dem Hackfleisch zu separieren,
eine Ausgabeleitung (138) für die harten Bestandteile, und
**gekennzeichnet durch**
eine Vorrichtung nach einem der Ansprüche 1 bis 11, wobei die Ausgabeleitung (138) für die harten Bestandteile mit der Einlassöffnung (14) für die harten Bestandteile der Vorrichtung fluidleitend verbunden ist.

13. Ein Verfahren zur Verwendung einer Vorrichtung nach einem der Ansprüche 1 bis 11, wobei das Verfahren die Schritte aufweist:
a. Bewegen des beweglichen Teiles (22) relativ zu dem Gehäuse (12), um das bewegliche Teil (22) in eine erste Position zu bringen,
b. Eingeben harter Bestandteile, welche aus dem Hackfleisch separiert wurden, durch die Einlassöffnung (14) für die harten Bestandteile in die Kammer (24),
c. Bewegen des beweglichen Teiles (22) relativ zu dem Gehäuse (12), um das bewegliche Teil in eine zweite Position zu bringen,
d. Einleiten eines unter Druck stehenden Fluids durch die Einlassöffnung (16) für das unter Druck stehende Fluid in die Kammer (24), wodurch die harten Bestandteile aus der Kammer (24) durch die Auslassöffnung (20) für die harten Bestandteile ausgestoßen werden, und
e. Wiederholen der Schritte a - d.

14. Ein Verfahren nach Anspruch 13, wobei das unter Druck stehende Fluid ein Gas oder ein Gasgemisch ist, insbesondere Luft.

15. Ein Verfahren nach Anspruch 13 oder 14, wobei das Verfahren das Durchführen der Schritte a - d mit einer Geschwindigkeit im Bereich von bis zu 300-mal pro Minute umfasst, insbesondere im Bereich von 5- bis 250-mal pro Minute, insbesondere im Bereich von 10- bis 200-mal pro Minute, vor allem insbesondere im Bereich von 15- bis 150-mal pro Minute, wobei die Geschwindigkeit als eine Anzahl von Malen pro Minute definiert ist, dass sich das bewegliche Teil (22) in einer ersten Position befindet.

## Revendications

1. Dispositif pour transporter des parties dures séparées de la viande hachée, dans lequel le dispositif comprend
- un boîtier (12) qui est doté d'une ouverture d'entrée (14) pour les parties dures, et d'une ouverture de sortie (20) pour les parties dures,
**caractérisé par**
- une ouverture d'entrée (16) pour un fluide pressurisé, et
- à l'intérieur du boîtier (12) une pièce mobile (22) laquelle pièce mobile s'ajuste dans le boîtier (12) de sorte qu'elle peut bloquer l'ouverture d'entrée (14) pour les parties dures, l'ouverture de sortie (20) pour les parties dures et l'ouverture d'entrée (16) pour un fluide pressurisé, et laquelle pièce mobile (12) est mobile à l'intérieur et par rapport au boîtier (12) d'une première position à une deuxième position et de la deuxième position à la première position, et
dans lequel la paroi intérieure du boîtier (12) et la paroi de la pièce mobile entourent une chambre (24) laquelle chambre communique avec l'ouverture d'entrée (14) pour les parties dures lorsque la pièce mobile (22) est dans la première position, et communique avec l'ouverture d'entrée (16) pour le fluide pressurisé et avec l'ouverture de sortie (20) pour les parties dures lorsque la pièce mobile (22) est dans la deuxième position.

2. Dispositif selon la revendication 1, dans lequel le boîtier (12) comprend un couvercle (18) permettant à la pièce mobile (22) d'être retirée du boîtier (12).

3. Dispositif selon la revendication 1 ou 2, dans lequel à des zones où le boîtier (12) est destiné à guider la pièce mobile (22) pendant son mouvement, le dispositif fournit un jeu (26) entre le boîtier (12) et la pièce mobile (22).

4. Dispositif selon la revendication 3, dans lequel le jeu (26) est dans la plage de 0,01 à 1 mm, en particulier dans la plage de 0,02 à 0,5 mm.

5. Dispositif selon l'une quelconque des revendications 1-4, dans lequel le dispositif est configuré pour un mouvement de rotation de la pièce mobile (22) par rapport au boîtier (12).

6. Dispositif selon la revendication 5, dans lequel la forme de la pièce mobile (22) comprend la forme d'un cylindre circulaire.

7. Dispositif selon la revendication 5 ou 6, dans lequel le dispositif comprend en plus un moteur électrique configuré pour entraîner la pièce mobile (22).

8. Dispositif selon l'une quelconque des revendications 1-7, dans lequel le dispositif fournit deux ou plusieurs des chambres (24).

9. Dispositif selon la revendication 8, dans lequel le nombre de chambres (24) est dans la plage de deux à vingt, inclus, en particulier dans la plage de trois à quinze, inclus.

10. Dispositif selon l'une quelconque des revendications 1-9, dans lequel le volume de la chambre (24) est dans la plage de 0,5 à 10 cm³, en particulier dans la plage de 1 à 5 cm³.

11. Dispositif selon l'une quelconque des revendications 1-10, dans lequel le boîtier (12) est produit à partir d'un acier inoxydable et la pièce mobile (22) est produite à partir d'un matériau polymère.

12. Machine pour le hachage de viande, laquelle machine comprend
- une section de coupe (134) pour le hachage de la viande, laquelle section de coupe (134) est dotée de la capacité de séparer les parties dures de la viande hachée,
- un conduit d'évacuation (138) pour les parties dures, et
**caractérisée par**
- un dispositif selon l'une quelconque des revendications 1 à 11,
dans laquelle le conduit d'évacuation (138) pour les parties dures est relié de manière fluidique à l'ouverture d'entrée (14) pour les parties dures du dispositif.

13. Procédé pour l'usage d'un dispositif selon l'une quelconque des revendications 1 à 11, lequel procédé comprend les étapes de
a. déplacement de la pièce mobile (22) par rapport au boîtier (12) pour amener la pièce mobile (22) dans la première position,
b. introduction de parties dures séparées de la viande hachée par l'ouverture d'entrée (14) pour les parties dures dans la chambre (24),
c. déplacement de la pièce mobile (22) par rapport au boîtier (12) pour amener la pièce mobile (22) dans la deuxième position,
d. introduction de fluide pressurisé par l'ouverture d'entrée (16) pour un fluide pressurisé dans la chambre (24), éjection se faisant des parties dures de la chambre (24) par l'ouverture de sortie (20) pour les parties dures, et
e. répétition des étapes a-d.

14. Procédé selon la revendication 13, dans lequel le fluide pressurisé est un gaz ou un mélange de gaz, en particulier de l'air.

15. Procédé selon la revendication 13 ou 14, dans lequel le procédé comprend le passage des étapes a-d à une vitesse dans la plage allant jusqu'à 300 par minute, en particulier dans la plage de 5 à 250 par minute, plus particulièrement dans la plage de 10 à 200 par minute, le plus particulièrement dans la plage de 15 à 150 par minute, la vitesse étant définie comme le nombre de fois, par minute, que la pièce mobile (22) est dans une première position.
